Europäisches Patentamt

European Patent Office

Office européen des brevets

(19)

(11) Publication number : **0 209 314**
**B1**

(12) **EUROPEAN PATENT SPECIFICATION**

(45) Date of publication of patent specification :
07.03.90

(21) Application number : 86305276.7

(22) Date of filing : 08.07.86

(51) Int. Cl.⁵ : **F 16 D 13/68**

(54) Clutch driven plate assembly with anti-backlash damping.

(30) Priority : 11.07.85 US 754040

(43) Date of publication of application :
21.01.87 Bulletin 87/04

(45) Publication of the grant of the patent :
07.03.90 Bulletin 90/10

(84) Designated contracting states :
DE FR GB

(56) References cited :
FR–A– 2 118 762
FR–E–   92 027
GB–A–   115 152
GB–A– 2 006 391
US–A– 4 446 955
US–A– 4 615 425
PATENT ABSTRACTS OF JAPAN, vol. 7, no. 183 (M-235)[1328], 12th August 1983;& JP,A, 5884225 ( NISSAN JIDOSHA K.K. ) 20.05.1983

(73) Proprietor : SACHS AUTOMOTIVE CENTER a division of FICHTEL & SACHS INDUSTRIES
1120 E. Long Lake Road
Troy, Michigan 48098 (US)

(72) Inventor : Lech, Thaddeus, Jr.
P.O. Box 238
Sterling Heights Michigan 48078 (US)
Inventor : Mullard, Bruce Allen
50013 Degas
Mt. Clemens Michigan 48045 (US)

(74) Representative : Allden, Thomas Stanley et al
A.A. THORNTON & CO. Northumberland House 303-306 High Holborn
London WC1V 7LE (GB)

## Description

This invention relates to clutch driven plate assemblies.

The vehicle engine of an automotiver vehicle having a manual transmission produces power and inertia impulses which drive an engaged conventional friction clutch with an irregular series of thrusts with the transmission in neutral and the engine at idle rpm. These impulse will be transmitted through the clutch and transmission input shaft tp the transmission gears which become excited, resulting in oscillation through their backlash space to produce objectionable rattle.

There is generally disclosed in JP-A-58-84225 a clutch driven plate assembly for a clutch driving a transmission input shaft, comprising a hub assembly having an inner hub with a splined barrel for splining on to the input shaft and an outer hub having a radial flange, a clutch plate carrying friction facings at the outer periphery thereof, a spring retainer plate secured to the clutch plate to sandwich the radial flange therebetween, the clutch and spring retainer plates and the radial flange having axially aligned sets of circumferentially spaced windows therein, damper springs received in each set of windows, intermeshing backlash splines on the inner and outer hubs allowing limited relative rotation therebetween, and means yieldably resisting relative rotation between the inner and outer hubs including at least two detents in one hub radially biased into a corresponding number of camming recesses in the other hub, rotation of the clutch and spring retainer plates, the damper springs and the outer hub relative to the inner hub causing the detents to cam out of the recesses.

More specifically, in JP-A-58-84225 the detents comprise balls which make point or line contact with the walls of radial slots in the hub in which they are radially biased, i. e. their construction permits of minimum guidance in that hub.

In accordance with the present invention as claimed, the aforesaid generally disclosed clutch drive plate assembly is characterised in that the detents comprise plungers and in that a spacer is located between the clutch plate and the inner hub to pilot the inner hub central to the outer hub, anti-rotation tabs on the periphery of the spacer being received in notches in the outer hub.

The clutch drive plate assembly of the present invention, by the provision of its plungers in one hub radially biased into the camming recesses in the other hub yieldably to resist rotation between the inner and outer hubs, will dissipate engine impulses which otherwise would result in objectionable transmission gear rattle with the clutch engaged, the transmission in neutral and the engine at idle rpm.

By constructing the detents as plungers, a greater peripheral guidance theereof is available, thereby avoiding the possibility of the detents jamming in use. Moreover, the spacer will serve to prevent the inner and outer hubs from coming apart in one axial direction, and does so in a simple constructional manner.

If the spacer is provided with a friction surface engaging the clutch plate, then friction damping or lag is provided during normal damper operation when the spacer rotates with the outer hub.

A second spacer may be located between the outer hub and the spring retainer plate, and anti-rotation tabs on the second spacer are received in openings in the spring retained plate. Advantageously, the construction is such that the inner hub and the radially biased plungers are axially trapped in place between the two spacer relative to the outer hub.

Attention is also drawn to our US-A-4, 446, 955 in which a clutch driven plate assembly is disclosed utilizing a helical connection between an inner hub and an outer hub to allow relative axial movement between the hubs to dissipate the engine impulses. Further, attention is drawn to our US-A-4, 615, 425 which provides an axially oriented spring-loaded detent between the hub and a retainer for the same purpose.

In order that the present invention may be well understood these will now be described an embodiment thereof, given by way of example, reference being had to the accompanying drawings, in which :

Figure 1 is a rear elevational view with portions broken away of a clutch driven plate assembly embodying the present invention ;

Figure 2 is a cross sectional view of the assembly taken on the irregular line 2-2 of Figure 1 ;

Figure 3 is an enlarged partial elevational view of the intermeshing backlashing splines and yieldable means between the inner and outer hubs of the same clutch driven plate assembly positioned in the absence of applied torque ;

Figure 4 is an enlarged partial elevational view similar to Figure 3, but with torque applied in one direction of movement ;

Figure 5 is an enlarged rear elevational view of the inner hub ;

Figure 6 is a cross sectional view taken on the irregular line 6-6 of Figure 5 ;

Figure 7 is a rear elevational view with a portion broken away of the outer hub ;

Figure 8 is a cross sectional view taken on the irregular line 8-8 of Figure 7 ;

Figure 9 is a rear elevational view of a spacer piloting the inner hub in the outer hub ; and

Figure 10 is a cross sectional view taken on the line 10-10 of Figure 9.

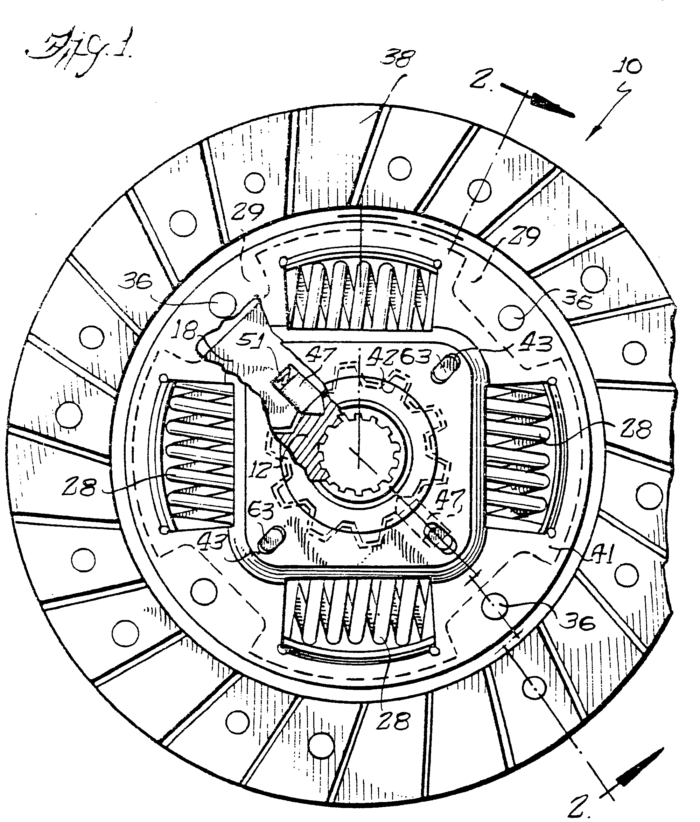

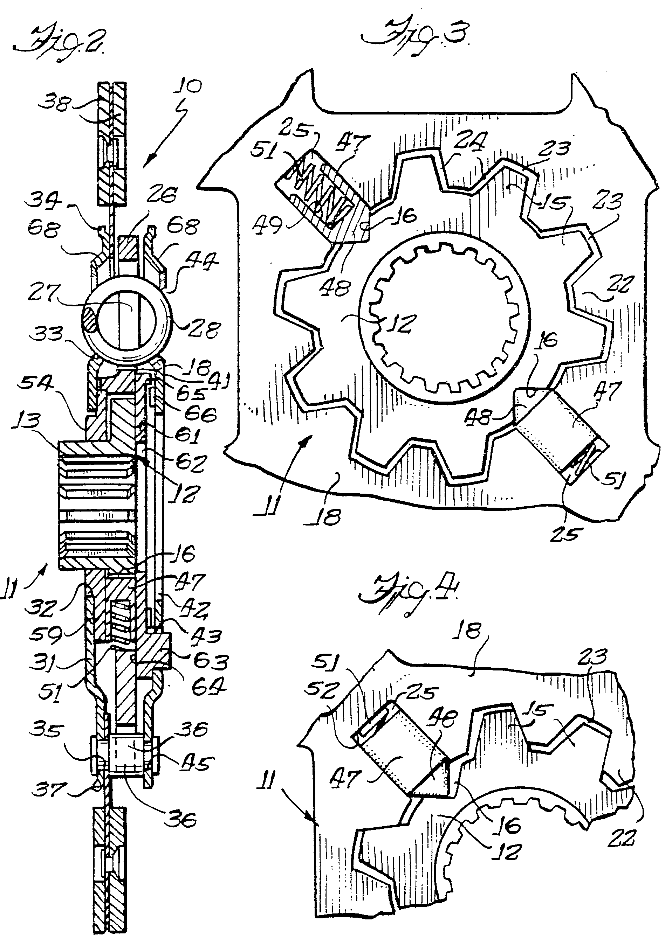

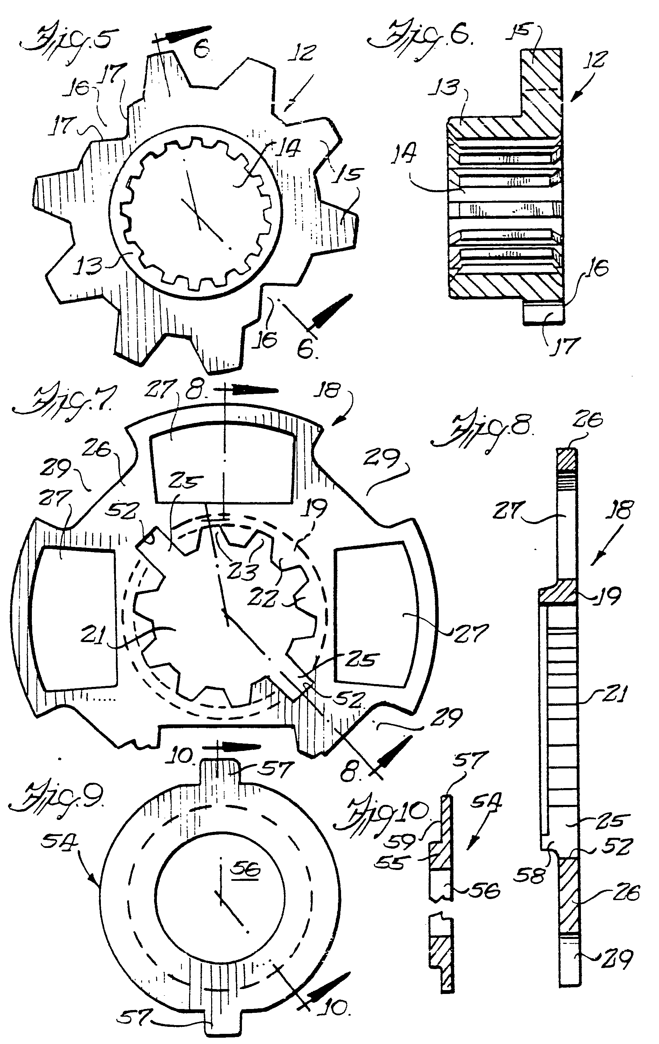

Referring first to Figures 1 and 2, a clutch driven plate assembly 10 includes a hub assembly 11, a clutch plate 31 carrying friction facings 38 mounted on the periphery thereof and adapted to be positioned between friction surfaces of a flywheel and a pressure plate (not shown) for the vehicle clutch, and a spring retainer plate 41. The hub assembly 11 includes an inner hub 12 (Figures 5 and 6) having a barrel 13 with a splined central opening 14 receiving the splined end of a transmission input shaft (not shown) and a plurality of integral radial splines 15. Located between the splines 15 are a pair of diametrically opposed V notches 16 forming camming surfaces 17 for a purpose to be later described.

An outer hub 18 (Figures 7 and 8) includes a short hub barrel 19 having a central opening 21 formed with splines 22 separated by notches 23 loosely receiving the splines 15 of the inner hub (12). As seen in Figure 3, there is sufficient clearance between the splines 15 and notches 23 to provide a backlash space 24 to allow limited relative rotation between the hubs. Also, positioned between the splines are a pair of diametrically opposed radially extending recesses 25 normally radially aligned with the V-notches 16. An integral radial flange 26 on the barrel 19 contains spring windows 27 for damper springs 28, and elongated notches 29 are formed in the periphery of the flange.

The clutch driven plate 31 has a central opening 32, a plurality of circumferentially equally spaced spring windows 33, and an outer periphery 34 containing a plurality of openings 35 arranged in a circle ; the openings receiving spacer pins 36 to secure a one-piece cushioning plate 37 thereto ; the plate carrying the opposed friction facings 38 for the clutch secured thereto.

The spring retainer plate 41 (Figures 1 and 2) has a central opening 42, a plurality of circumferentially spaced inner slots 43, a plurality of circumferentially equally spaced arcuate spring windows 44 axially aligned with the windows 27 and 33 of the outer hub flange 26 and clutch plate 31, respectively, and a plurality of openings 45 in its periphery axially aligned with openings 35 to receive spacer rivets 36 securing the clutch plate 31 and spring retainer plate 41 together ; the rivets extending through the elongated notches 29 in the outer hub flange periphery.

Located in the radial recesses 26 in the outer hub area pair of plungers 47, each having a camming nose 48 complementary to a V-notch 16 and a rearwardly opening recess 49 to receive one end of a low rate compression spring 51, the opposite end of the spring abutting the closed end 52 of the recess 25. Each plunger 47 is yieldably biased into substantially complete engagement in its associated notch 16 in the absence of applied torque (Figure 3).

Journalled on the inner hub barrel 13 is a generally circular spacer 54 with an inner hub portion 55 received in the clutch plate central opening 32 and having a central opening 56 receiving the inner hub barrel 13, and a pair of diametrically oppositely disposed radial locating tabs 57 received in notches 58 formed in the forward surface of the outer hub barrel 19. The spacer provides a friction surface 59 engaging the clutch plate 31 and pilots the inner hub central to the outer hub, the friction surface 59 providing friction damping or lag during normal damper operation when the spacer rotates with the outer hub. On the opposite side of the hub assembly is a second generally annular spacer 61 having a central opening 62, a plurality of spaced rearwardly extending anti-rotation tabs 63 projecting into the slots 43 in the spring retainer plate 41, a friction surface 64 engaging the inner and outer hubs, and a rearwardly extending stop 65 to prevent a wave spring 66 between the spacer 61 and plate 41 from being compressed to solid ; the spacer 61 piloting the wave spring 66. The inner hub 12, plungers 47 and springs 51 are trapped in place axially by the spacers 54 and 61.

One or more concentric damper springs 28 are located in each aligned set of spring windows 33, 44 and 27 in the plates and outer hub flange, with the plate windows 33 and 44 having inclined lips 68 to retain the springs in operative position. As seen in Figure 1, the spring windows 27 in the outer hub flange 26 and the clutch and spring retainer plate windows 33 and 44 have the same circumferential dimension so that the outer hub, plates and damper springs can rotate together.

In the normal position of the hub assembly with the clutch engaged and no torque applied, as seen in Figures 1 and 3, the plungers 47 are resiliently biased into engagement in the complementary V notches or recesses 16 in the inner hub. This clutch assembly operate in the same manner as a conventional assembly except for the action of the plungers in the hub assembly at idle rpm and in neutral transmission position. With the clutch plate engaged between the flywheel and pressure plate, the engine impulses during idle act to rotate the clutch plate 31, spring retainer plate 41, damper springs 28 and outer hub 18 relative to the inner hub 12 due to the backlash space 24. This relative rotation between the inner and outer hubs causes the plungers 47 to cam out of the recesses 16 in the inner hub against the force of the compression springs 51 to produce a resilient cushioning and prevent gear rattle (see Figure 4). Movement continues until the splines and notches in the inner and outer hubs are in engagement. The energy of the impulses is used to actuate the plungers in the above manner rather than transmit the undiminished impulses to the vehicle transmission to cause its gear to rattle.

In the normal driving mode of the vehicle, the plates 31, 41 move against the damper springs 28 to compress them upon torque application to the friction facings, which will dampen the vibrations of the drive train to the hub assembly in a conventional manner. Although shown with a pair of plungers received in a pair of mating camming recesses or notches, obviously more than two plungers and corresponding recesses could be utilized in the present construction.

**Claims**

1. A clutch driven plate assembly for a clutch dribing a transmission input shaft, comprising a hub assembly (11) having an inner hub (12) with a splined barrel (13) for splinning on to the input shaft and an outer hub (18) having a radial flange (26), a clutch plate (31) carrying friction facings (38) at the outer periphery thereof, a spring retainer plate (41) secured to the clutch plate to sandwich the radial flange therebetween, the clutch and spring retainer plates and the radial flange having axially aligned sets of circumferentially spaced windows (33, 27, 44) therein, damper springs (28) received in each set of windows, intermeshing backlash splines (15, 22) on the inner and outer hubs allowing limited relative rotation therebetween, and means yieldably resisting relative rotation between the inner and outer hubs including at least two detents (47) in one hub radially biased into a corresponding number of camming recesses (16) in the other hub, rotation of the clutch and spring retainer plates, the damper springs and the outer hub relative to the inner hub causing the detents to cam out of the recesses, characterised in that the detents comprise plungers (47) and in that a spacer (54) is located between the clutch plate (31) and the inner hub (12) to pilot the inner hub central to the outer hub (18), anti-rotation tabs (57) on the periphery of the spacer being received in notches (58) in the outer hub.

2. A clutch driven plate assembly as claimed in claim 1, wherein a second spacer (61) is located between the outer hub (18) and the spring retainer plate (41), and anti-rotation tabs (63) on the second spacer are received in openings (43) in the spring retainer plate (41).

3. A clutch driven plate assembly as claimed in claim 2, wherein the inner hub (12) and the spring biased plungers (47) are axially retained in place by the spacers (54, 61).

4. A clutch driven plate assembly as claimed in claim 2 or claim 3, including a wave spring (66) between the second spacer (61) and the spring retainer plate (41), and a stop (65) on the second spacer adapted to engage the spring retainer plate to prevent the wave spring going solid.

5. A clutch driven plate assembly as claimed in any of claims 2 to 4, including friction surfaces (59, 64) on the first-mentioned spacer (54) and the second spacer (61) engaging the clutch plate (31) and the inner (12) and outer (18) hubs, respectively.

6. A clutch drive plate assembly as claimed in any of the preceding claims, wherein the intermeshing splines (15, 22) have sufficient clearance therebetween so as to allow limited rotation of the clutch and spring retainer plates (31, 41), the damper springs (28) and the outer hub (18) relative to the inner hub (12) without compression of the damper springs.

7. A clutch driven plate assembly as claimed in any of the preceding claims, wherein the spring windows (27, 33, 44) in the clutch and spring retainer plates (31, 41) and the outer hub (18) all have the same circumferential dimension.

8. A clutch driven plate assembly as claimed in any of the preceding claims, wherein the inner hub (12) has the camming recesses (16) circumferentially equally spaced between the splines (15) to receive the radially biased plungers (47).

9. A clutch driven plate assembly as claimed in any of the preceding claims, wherein the outer hub (18) has radially extending recesses (25) receiving the plungers (47).

10. A clutch driven plate assembly as claimed in claim 9, wherein each plunger (47) includes a camming nose (48) for being received in a respective camming recess (16) and a rearwardly opening third recess (49), and a compression spring (51) is positioned in each radial recess (25) with one end received in the respective plunger recess (25) to radially bias the plunger (47).

**Patentansprüche**

1. Scheibeneinheit für eine eine Getriebeeingangswelle antreibende Kupplung mit einer Nabeneinheit (11), die eine innere Nabe (12) mit einem mit Keilen versehenen Ansatz (13) zum Aufkeilen auf die Eingangswelle und eine äußere Nabe (18) mit einem radialen Flansch (26) aufweist, einer Kupplungsscheibe (31), die an ihrem Außenumfang Reibflächen (38) trägt, einer Federhalteplatte (41), die an der Kupplungsscheibe befestigt ist und den radialen Flansch dazwischen aufnimmt, wobei die Kupplungsscheibe und die Federhalteplatte sowie der radiale Flansch axial ausgerichtete Reihen von mit Umfangsabstand angeordneten Fenstern (33, 27, 44) aufweisen, Dämpfungsfedern (28), die in jeder Reihe von Fenstern angeordnet sind, miteinander kämmenden, Spiel aufweisenden Keilen (15, 22) an der inneren Nabe und der äußeren Nabe, die eine begrenzte Relativdrehung dazwischen ermöglichen, und Einrichtungen, die einer Relativdrehung zwischen der inneren und äußeren Nabe nachgiebig entgegenwirken und mindestens zwei Arretierungselemente (47) in einer Nabe besitzen, die in Radialrichtung in eine entsprechende Zahl von Ausnehmungen (16) in der anderen Nabe hineingedrückt werden, wobei durch die Drehung der Kupplungsscheibe und der Federhalteplatte, der Dämpfungsfedern und der äußeren Nabe relativ zur inneren Nabe eine Bewegung der Arretierungselemente aus den Ausnehmungen heraus bewirkt wird, dadurch gekennzeichnet, daß die Arretierungselemente Kolben (47) umfassen und daß ein Abstandselement (54) zwischen der Kupplungsscheibe (31) und der inneren Nabe (12) angeordnet ist, um die innere Nabe mittig zur äußeren Nabe (18) zu führen, wobei eine Drehung verhindernde Laschen (57) am Unfang des Abstandselementes in in der äußeren Nabe vorgesehenen Kerben (58) angeordnet sind.

2. Scheibeneinheit nach Anspruch 1, bei der ein zweites Abstandselement (61) zwischen der äußeren Nabe (18) und der Federhalteplatte (41) angeordnet ist und eine Drehung verhindernde Laschen (63) am zweiten Abstandselement in Öffnungen (43) in der Federhalteplatte (41) aufgenommen sind.

3. Scheibeneinheit nach Anspruch 2, bei der die innere Nabe (12) und die federbelasteten Kolben (47) von den Abstandselementen (54, 61) in Axialrichtung an Ort und Stelle gehalten werden.

4. Scheibeneinheit nach Anspruch 2 oder 3 mit einer Wellenfeder (66) zwischen dem zweiten Abstandselement (61) und der Federhalteplatte (41) und einem Anschlag (65) am zweiten Abstandselement, der mit der Federhalteplatte in Eingriff treten kann, um eine Verfestigung der Wellenfeder zu verhindern.

5. Scheibeneinheit nach einem der Ansprüche 2 bis 4 mit Reibflächen (59, 64) am zuerst erwähnten Abstandselement (54) und dem zweiten Abstandselement (61), die jeweils mit der Kupplungsscheibe (31) und der inneren (12) sowie äußeren (18) Nabe in Eingriff stehen.

6. Scheibeneinheit nach einem der vorangehenden Ansprüche, bei der die miteinander kämmenden Keile (15, 22) ausreichend Spiel dazwischen aufweisen, so daß sie eine begrenzte Drehung der Kupplungsscheibe und Federhalteplatte (31, 41), der Dämpfungsfedern (28) und der äußeren Nabe (18) relativ zu inneren Nabe (12) ohne Kompression der Dämpfungsfedern zulassen.

7. Scheibeneinheit nach einem der vorangehenden Ansprüche, bei der die Federfenster (27, 33, 44) in der Kupplungsscheibe und der Federhalteplatte (31, 41) und der äußeren Nabe (18) alle die gleiche Umfangsabmessung besitzen.

8. Scheibenenheit nach einem der vorangehenden Ansprüche, bei der die Ausnehmungen (16) in der inneren Nabe (12) mit gleichen Umfangsabständen zwischen den Keilen (15) zur Aufnahme der radial unter Vorspannung stehenden Kolben (47) angeordnet sind.

9. Scheibeneinheit nach einem der vorangehenden Ansprüche, bei der die äußere Nabe (18) radial verlaufende Ausnehmungen (25) zur Aufnahme der Kolben (47) aufweist.

10. Scheibeneinheit nach Anspruch 9, bei der jeder Kolben (47) eine Nase (48) umfaßt, die in einer entsprechenden Ausnehmung (16) und einer sich nach hinten öffnenden dritten Ausnehmung (49) anordbar ist, und daß eine Druckfeder (51) in jeder radialen Ausnehmung (25) vorgesehen ist, wobei sich ein Ende in der entsprechenden Kolbenausnehmung (25) befindet, um den Kolben (47) in radialrichtung unter Vorspannung zu setzen.

**Revendications**

1. Disque mené d'embrayage pour un embrayage entraînant un arbre d'entrée d'une transmission comprenant un moyeu assemblé (11) ayant un moyeu intérieur (12) avec un cylindre cannelé (13) pour montage sur l'arbre d'entrée et un moyeu extérieur (18) ayant un flasque radial (26), un disque d'embrayage (31) comportant des garnitures de friction (38) à sa périphérie extérieure, un disque (41) de retenue de ressort fixé au disque d'embrayage pour placer le flasque radial entre eux, les disques d'embrayage et de retenue de ressort et le flasque radial comportant des jeux, alignés axialement, de fenêtres espacées circonférentiellement les unes des autres (33, 27, 44), des ressorts d'amortissements (28) reçus dans chaque jeu de fenêtres, mettant en prise des cannelures de rattrapage de jeu (15, 22) sur les moyeux intérieur et extérieur permettant une rotation relative limitée entre eux, et un moyen résistant élastiquement à une rotation relative entre les moyeux intérieur et extérieur comprenant au moins deux organes d'arrêt (47) dans un moyeu sollicités radialement dans un nombre correspondant d'évidements (16) à effet de came de l'autre moyeu, la rotation des disques d'embrayage et de retenue de ressort, des ressorts d'amortissement et du moyeu extérieur par rapport au moyeu intérieur provoquant la sortie des organes d'arrêt hors des évidements, caractérisé en ce que les organes d'arrêt comprennent des plongeurs (47) et en ce qu'une entretoise (54) est située entre le disque d'embrayage (31) et le moyeu intérieur (12) pour guider le moyeu intérieur au centre du moyeu extérieur (18), des pattes anti-rotation (57) sur la périphérie de l'entretoise étant reçues dans des encoches (58) du moyeu extérieur.

2. Disque mené d'embrayage selon la revendication 1, dans lequel une seconde entretoise (61) est placée entre le moyeu extérieur (18) et le disque (41) de retenue de ressort, et des pattes anti-rotation (63) de la seconde entretoise sont reçues dans des ouvertures (43) ménagées dans le disque (41) de retenue de ressort.

3. Disque mené d'embrayage selon la revendication 2, dans lequel le moyeu intérieur (12) et les plongeurs (47) sollicités par ressort sont maintenus axialement en place par les entretoises (50, 51).

4. Disque mené d'embrayage selon la revendication 2, ou la revendication 3, comprenant un ressort ondulé (66) entre la seconde entretoise (61) et le disque (41) de retenue de ressort, et une butée (65) sur la seconde entretoise destinée à venir en contact avec le disque de retenue de ressort de manière à éviter que le ressort ondulé ne devienne solide.

5. Disque mené d'embrayage selon l'une quelconque des revendications 2 à 4, comprenant des surfaces de friction (59, 64) sur l'entretoise (54) citée en premier, et la seconde entretoise (61) venant en contact avec le disque d'embrayage (31) et les moyeux intérieur (12) et extérieur (18), respectivement.

6. Disque mené d'embrayage selon l'une quelconque des revendications précédentes, dans lequel les cannelures d'engrènement (15, 22) ont un jeu suffisant (13) pour permettre une rotation limitée des disques (31, 41) d'embrayage et de retenue de ressort, des ressorts d'amortissement (28) et du moyeu extérieur (18) par rapport au moyeu intérieur (12) sans compression des ressorts d'amortissement.

7. Disque mené d'embrayage selon l'une quelconque des revendications précédentes, dans lequel les fenêtres à ressort (27, 33, 44) des disques (31, 41) d'embrayage et de retenue et le moyeu extérieur (18) ont tous la même cote circonférentielle.

8. Disque mené d'embrayage selon l'une quelconque des revendications précédentes, dans lequel le moyeu intérieur (12) a des évidements (16) faisant effet de came, espacés circonférentiellement les uns des autres de la même distance entre les cannelures (15) de manière à recevoir les plongeurs (47) sollicités radialement.

9. Disque mené d'embrayage selon l'une quelconque des revendications précédentes, dans lequel le moyeu extérieur (18) présente des évidements (25) s'étendant radialement qui reçoivent les plongeurs (47).

10. Disque mené d'embrayage selon la revendication 9, dans lequel chaque plongeur (47) comprend un nez (48) faisant effet de came pour réception dans un évidement correspondant (16) faisant effet de came et un troisième évidemment (49) débouchant vers l'arrière, et un ressort de compression (51) est placé dans chaque évidement radial (25) avec une extrémité reçue dans l'évidement respectif (25) du plongeur de manière à solliciter radialement le plongeur (47).

Fig. 1

*Fig.2.*

38
10
34
26
68
68
44
27
28
33
18
41
54
65
66
61
13
62
12
16
11
47
32
42
59
43
31
63
51
64
35
36
37
45
36

*Fig.3.*

25
51
47
24
23
49
15
23
16
48
22
12
11
18
18
16
47
48
51
25

*Fig.4.*

51
52
18
23
25
48
15
11
47
16
22
12

Fig.5

Fig.6.

Fig.7.

Fig.8.

Fig.9.

Fig.10.